# EUROPEAN PATENT SPECIFICATION

(11) **EP 3 152 041 B1**
(45) Date of publication and mention of the grant of the patent: **20.09.2017**
(21) Application number: 15762785.2
(22) Date of filing: 29.06.2015
(51) Int. Cl.: B29C 73/16

(54) **A TYRE REPAIR KIT LIQUID AND PRODUCTION METHOD OF SAID LIQUID**
FLÜSSIGKEIT FÜR REIFENFLICKSET UND VERFAHREN ZUR HERSTELLUNG DIESER FLÜSSIGKEIT
LIQUIDE POUR KIT DE RÉPARATION DE PNEUS ET PROCÉDÉ DE PRODUCTION DUDIT LIQUIDE

(43) Date of publication of application: 12.04.2017
(73) Proprietor: Arikan Kriko Ve Makina Sanayi Ticaret Anonim Sirketi, 26110 Eskisehir (TR)
(72) Inventor: SIDE, Nilgün, Eskisehir (TR); AKYALÇIN, Levent, Eskisehir (TR)
(74) Representative: Sezgin, Hatice Özlem
(86) International application number: PCT/TR2015/050018
(87) International publication number: WO 2016/182517

(56) References cited:
- US-A- 4 187 348
- US-A1- 2007 149 653
- US-B1- 8 772 370

## Description

### The Related Art

The invention relates to the use of clay in the production of a tyre repair kit liquid after being modified with a surface active agent.

The invention particularly relates to the use of clay from the group of non-swelling clay in the production of a tyre repair kit liquid after being modified.

### The Prior Art

A tyre repair kit used in the automotive sector, as described in document US 2007/149653 A1, is a product consisting of a tyre repair liquid and a compressor system. In the case of a tyre blowout during a trip, repair works are done by the kit, by means of sealing a hole opened on the tyre via the tyre repair liquid injected into the tyre through the tyre valve, and then bringing the tyre to its ideal pressure with the compressor system. This product, providing a temporary repair, enables movement of the car to a centre where a permanent repair would be provided.

As a result of the research made in the literature, one of the applications we encountered was the application No EP1826255. In said application, the tyre repair liquid comprises a synthetic latex selected from the group consisting of SBR latex, NBR latex, MBR latex, BR latex, carboxyl-modified NBR latex, and carboxyl-modified SBR latex; and an antifreezing agent.

Another one of these applications is the application no EP 2157150. In this application; the kit comprises at least one synthetic latex and a deterioration preventing agent. Another one is the application no EP2269811. This application comprises a latex and 1,3-propanediol.

Clay may or may not be used in some of the applications found in the literature or in tyre repair liquids forming the prior art tyre repair kits. However, clay is preferred due to its high performance and low cost features. Besides, modification of the surface characteristics of clay and ensuring homogeneous distribution of clay within the system are significant characteristics required for said tyre repair kit liquid.

As a result of these negativities and the inadequacy of the current solutions on the issue; it becomes imperative that an improvement in the relevant technical field about tyre repair kit liquid production is to be made.

### Purpose of the Invention

The present invention relates to a tyre repair kit liquid and the production method of said liquid, which meets the above said requirements, eliminates all of the drawbacks and brings about some additional advantages.

The main purpose of the present invention is to use clay in production of a tyre repair kit liquid after being modified with a surface active agent.

Another purpose of the invention is to modify the surface characteristics of clay by enabling adhesion of the surface active agent onto the clay surface, and in this way, ensure homogeneous distribution of clay in the system without agglomerating.

Another purpose of the invention is to make modification especially on non-swelling clay. This is because, non-swelling clay does not absorb water from the medium. In this way, the balance of the system is maintained and agglomeration is prevented.

Another purpose of the invention is to eliminate the problem of injection that occurs while the liquid is transferred into the tyre after clay is used.

Another purpose of the invention is to extend the shelf life of the product by means of eliminating the agglomeration problem for the particles.

Another purpose of the invention is to maintain the homogeneity of the liquid and preserve the liquid for its whole shelf life by means of preventing agglomeration of particles.

In order to achieve the above said purposes, the invention is a tyre repair kit liquid, comprising latex, an antifreezing agent, and clay modified with a surface active agent.

The structural and characteristic features of the invention and all advantages will be understood better in detailed descriptions with the figures given below and with reference to the figures, and therefore, the assessment should be made taking into account the said figures and detailed explanations.

### Figures for Better Understanding of the Invention

**Figure 1****:** is the view of a sealant prepared with high swelling capacity montmorillonite clay filtered through a 50 µ sieve.
**Figure 2****:** is the view of a sealant prepared with non-swelling sepiolite clay, filtered through a 50 µ sieve.
**Figure 3****:** is the view of a sealant prepared with non-swelling kaolinite clay, filtered through a 50 µ sieve.
**Figure 4****:** is the view of surface active agent-modified organo-montmorillonite, filtered through a 50 µ sieve.
**Figure 5****:** is the view of surface active agent-modified organo-sepiolite, filtered through a 50 µ sieve.
**Figure 6****:** is the view of non-modified sepiolite filtered through a 50 µ sieve after being stored at 80°C temperature for 96 hours.
**Figure 7****:** is the view of surface active agent-modified organo-sepiolite filtered through a 50 µ sieve after being stored at 80°C tem perature for 96 hours.

Drawings do not have to be scaled and details not necessary for understanding the present invention may be neglected. Moreover, components which are at least widely equal or which have at least widely equal functions are shown with the same number.

### Detailed Description of the Invention

In this detailed description, the preferred embodiments of the tyre repair kit liquid according to the present invention will only be disclosed for better understanding of the subject, and will not form any limiting effect.

The tyre repair liquid of the present invention is a product of a tyre repair kit used in the automotive sector. The characteristic of the invention and its difference from the prior art is the modification of clay with a surface active agent. This causes the added surface active agent to adsorb on the surface of clay and modify its surface characteristics and enable homogeneous distribution of clay in the system without agglomerating.

**The raw materials of the tyre repair liquid of the present invention are as follows:**

| *Raw material* | *Preferred ratio by weight (%)* | *Usable ratio by weight (%)* |
|---|---|---|
| Latex | 58,5 | 50-80 |
| Water | 7,5 | 5-20 |
| Antifreezing agent | 28 | 20-50 |
| Antioxidant | 3,5 | 2-10 |
| Modified clay | 2,5 | 1-8 |

Latex is the main material. Water enables reduction of the solid substance ratio of latex and thus prevents agglomeration. Clay is used for increasing/facilitating the sealing feature by means of increasing solid substance ratio in the medium. The characteristic and the novelty of the present invention is the modification of said clay with a surface active agent.

### Said surface active agent ensures,

- modification of the surface characteristics and the surface charge of clay via adsorption on the surface of the added clay, and
- homogeneous distribution of clay within the system without agglomerating.

In the preferred embodiment of the invention, HDTMA (hexadecyltrimethyl ammonium bromide), CPC (cethylpridinium chloride), CTAB (cethyltrimethylamonium bromide), sodium lauryl sulphate etc. modification surface active agents can be used as the surface active agent.

| Clay minerals | Cation Exchange Capacity Limits (meq/100g) |
|---|---|
| Montmorillonite (smectite) | 80-150 |
| Vermiculite | 100-150 |
| Zeolite | 170-260 |
| Sepiolite-Attapulgite | 20-30 |
| Halloysite.2H₂O | 5-10 |
| Halloysite.4H₂O | 10^0 |
| iUit | 10^0 |
| Chlorite | 10-40 |
| Kaolinite | 3-15 |

Antioxidant enables extension of the shelf life; and the antifreezing agent enables protection of the product functionality between the temperature conditions of - 40/+80°C. Ethylene glycol, propylene glycol, glycerin etc. substances can be used as the antifreezing agent. Ethylene glycol is used in a preferred embodiment of the invention.

### Peparation of the modified clay of the invention comprises:

- grinding of clay to micron level, washing, and placement into a container, (non-swelling clay is used in the preferred embodiment of the invention)
- addition of a surface active agent onto the clay according to the cation exchange capacity and mixing under high temperature for 24 hours,
- filtering, washing with distilled water, and drying, and
- grinding of the modified clay.

### By using the above said ratios, the production method of the repair kit liquid comprises:

- dilution of the latex by means of mixing with water,
- addition of the antifreezing agent onto the diluted latex slowly and mixing, (Ethylene glycol is used as the antifreezing agent in a preferred embodiment of the invention)

If ethylene glycol is added before water, or mixing is not made during addition, agglomeration occurs. This directly affects the shelf life, sealing performance, and the injection of the liquid. The ratio of the ethylene glycol within the liquid to water should be above 50%. Preferably, it should be above 70% and below 90%. If this ratio is below 70%, the liquid freezes at -40°C. Wh en it is above 90%, agglomeration occurs.
- addition of an antioxidant into the water during mixing, and
- addition of previously prepared modified clay during mixing.

### Experimental studies:

Clays can be divided into various different types of categories due to factors such as clay minerals having a great and complex mineral array, comprising foreign substances, and having different places and characteristics of formation. Clay materials have layered structure and thus they are divided into two groups as swelling and non-swelling clays according to the characteristics of these layers. Swelling clay particles can grow 2 to 15 times of their sizes by means of absorbing the water found in the medium.

### Characteristics of non-swelling clays:

Swelling of clay via absorption of water into its structure is a situation related to the layer structure. In clays with a 2:1 layer group, the bonds between the layers are quite weak, since they are made via Van Der Waals and cations. These weak bonds can easily break with small forces or via absorption of water. As a result of this; significant increases occur in volume. Since non-swelling clays do not absorb water into their structure in this way, they do not absorb the water found in the medium and do not change the water level of the mixture.

In the present invention, the reason for using clays from the group of non-swelling clays is the easy agglomeration of sealants prepared with swelling clays such as montmorillonite; and the significant reduction of agglomeration in the sealants prepared with non-swelling clays such as kaolinite, sepiolite etc. as also can be seen from the below given study. When the recipes prepared by using the same amount of clays are compared, as can be seen from the figures, a significant difference can be seen in the amount of swelling clay left on the filter.

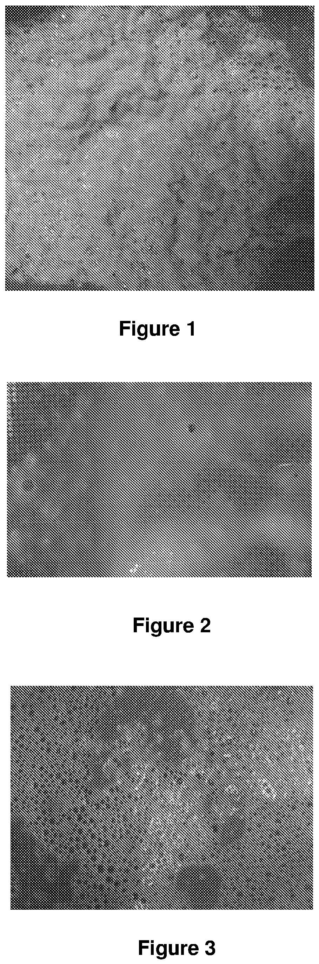

Figure 1; is the view of a sealant prepared with high swelling capacity montmorillonite clay filtered through a 50 µ sieve. Figure 2; is the view of a sealant prepared with non-swelling sepiolite clay, filtered through a 50 µ sieve. Figure 3; is the view of a sealant prepared with non-swelling kaolinite clay, filtered through a 50 µ sieve. As can be seen from the figures, when swelling clay is used, excessive agglomeration occurs; however, when non-swelling used, the agglomeration is somewhat reduced.

The characteristic of the present invention is the modification of clay with a surface active agent. Said modification operation is performed by means of mixing the clay with a surface active agent under high temperature, before being added. During this operation, modification occurs in the ratio of cation exchange capacity of the clay, and the surface active agent is adhered on the clay surface. When the organo-clay formed as a result of this modification is added into the sealant, the distribution of the particles became more homogeneous and agglomeration was completely eliminated.

The clay group is divided into two categories as swelling and non-swelling clays. Individual studies made on swelling and non-swelling clays are given below. In said studies, sealants prepared by using the same amount of modified clay are filtered through 50 µ sieves and their levels of agglomeration were compared. In the studies made on both of the clay groups, it was determined that the amount of modified clay group left on the sieve was significantly lower than the amount of non-modified clay group left on the sieve.

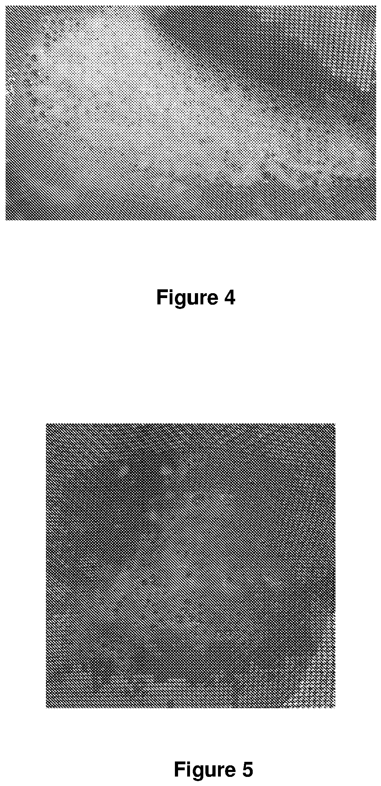

Figure 4; is the view of surface active agent-modified organo-montmorillonite, filtered through a 50 µ sieve. A clear reduction is determined in the amount left on the filter compared to non-modified montmorillonite. The clay used here has swelling feature.

Figure 5; is the view of surface active agent-modified organo-sepiolite, filtered through a 50 µ sieve. An observable reduction was determined in the amount left on the sieve compared to the non-modified sepiolite. This means that agglomeration can be reduced significantly, if the non-swelling clay groups are modified with the surface active agent. In the light of this, the filtering operation is repeated while maintaining the modified organo-sepiolite clay at the temperatures where highest amount of agglomeration was seen.

As can be seen from Figure 5, in modified non-swelling clay types, agglomeration can be reduced significantly with regard to modified swelling clay types.

### The impact of high temperature on the surface active agent-modified and the non-modified sepiolite:

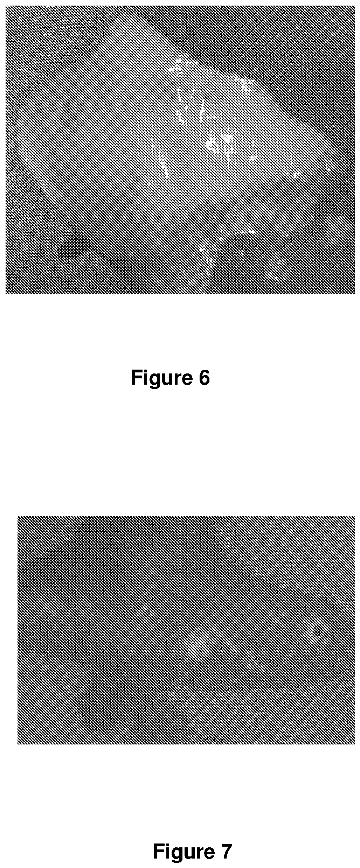

Figure 6 is the view of *non-modified sepiolite* filtered through a 50 µ sieve after being stored at 80°C temperature for 96 hours. From this figure, it can be seen that agglomeration increases at high temperature.

Figure 7 is the view of surface active agent-*modified organo-sepiolite* filtered through a 50 µ sieve after being stored at 80°C temperature for 96 hours. It was determined that modification prevents agglomeration even under high temperature.

As a result, a table can be formed as below about the agglomeration rates:

| | Natural Clay | | | | Clay modified with surface active agent | |
|---|---|---|---|---|---|---|
| | Swelling | Non-swelling | | | Swelling | Non-swelling |
| | Montmorillonite | Sepiolite | Kaolinite | | Montmorillonite | Sepiolite |
| 25°C | D | B | B | | B | A |
| 80°C | - | C | - | | - | A |

D: Excessive agglomeration
C: High agglomeration
B: Low agglomeration
A: Very low agglomeration

## Claims

1. A tyre repair kit liquid, **characterized in that**; it comprises latex, an antifreezing agent, and clay modified with a surface active agent.

2. A tyre repair kit liquid according to Claim 1, **characterized in that**; it comprises 50-80% by weight latex, 20-50% by weight antifreezing agent, and 1-8% weight modified clay.

3. A tyre repair kit liquid according to Claim 1, **characterized in that**; said antifreezing agent is ethylene glycol.

4. A tyre repair kit liquid according to Claim 1, **characterized in that**; it comprises water.

5. A tyre repair kit liquid according to Claim 4, **characterized in that**; the ratio of said water is 5-20% by weight.

6. A tyre repair kit liquid according to Claim 1, **characterized in that**; it comprises an antioxidant.

7. A tyre repair kit liquid according to Claim 6, **characterized in that**; the ratio of said antioxidant is 2-10% by weight.

8. A method of producing a tyre repair kit liquid using the components disclosed in Claim 1, **characterized in that**; it comprises the operation steps of:
a) modification of clay with a surface active agent,
b) addition of the antifreezing agent onto latex slowly and mixing, and
c) addition of modified clay into said mixture.

9. A tyre repair kit liquid production method according to Claim 8, **characterized in that**; it comprises dilution of latex with water before being mixed with the antifreezing agent.

10. A tyre repair kit liquid production method according to Claim 8, **characterized in that**; it comprises addition of an antioxidant into the mixture found in operation step b.

11. A tyre repair kit liquid production method according to Claim 8, **characterized in that**; it comprises grinding of the modified clay before being added into the mixture.

12. A tyre repair kit liquid production method according to Claim 8, **characterized in that**; the modification found in operation step a comprises the operation steps of:
• grinding the clay to the micron level, washing, and placing in a container,
• addition of a surface active agent onto the clay according to the cation exchange capacity and mixing under high temperature,
• filtering, washing with distilled water, and drying.

13. A tyre repair kit liquid production method according to Claim 12, **characterized in that**; said mixing is done for 24 hours.

## Patentansprüche

1. Reifenreparatursetsflüssigkeit, **dadurch gekennzeichnet, dass** es Latex, Frostschutzmittel, ein Tensid und modifizierten Ton umfasst.

2. Reifenreparatursetsflüssigkeit nach Anspruch 1, **dadurch gekennzeichnet, dass** es 50-80% Gewicht von Latex, 20-50% Gewicht von Frostschutzmittel, 1-8% Gewicht vonmodifiziertem Ton umfasst.

3. Reifenreparatursetsflüssigkeit nach Anspruch 1, **dadurch gekennzeichnet, dass** dieser Frostschutzmittelein Ethylenglykol ist.

4. Reifenreparatursetsflüssigkeit nach Anspruch 1, **dadurch gekennzeichnet, dass** es Wasser umfasst.

5. Reifenreparatursetsflüssigkeit nach Anspruch 4, **dadurch gekennzeichnet, dass** dieses Wassergehalt 5-20% von Gewicht ist.

6. Reifenreparatursetsflüssigkeit nach Anspruch 1, **dadurch gekennzeichnet, dass** es Antioxidans umfasst.

7. Reifenreparatursetsflüssigkeit nach Anspruch 6, **dadurch gekennzeichnet, dass** dieses Antioxidansgehalt 2-10% von Gewicht ist.

8. Herstellungsverfahren für Reifenreparatursetsflüssigkeit beim Benutzen der aus dem Anspruch 1 bekannten Merkmalen, **dadurch gekennzeichnet, dass** es die folgenden Prozessschritte umfasst;
a) die Modifikation des Tons mit einem Tensid,
b) die langsame Beifügung und die Vermischung des Frostschutzmittels über den Latex,
c) die Beifügung des modifizierten Tons in diese Mischung.

9. Herstellungsverfahren für Reifenreparatursetsflüssigkeit nach Anspruch 8, **dadurch gekennzeichnet, dass** der Latex, bevor es mit dem Frostschutzmittel vermischt wird, mit Wasser verdünnt ist.

10. Herstellungsverfahren für Reifenreparatursetsflüssigkeit nach Anspruch 8, **dadurch gekennzeichnet, dass** in die Mischung im Prozessschritt b, Antioxidans beigefügt wird.

11. Herstellungsverfahren für Reifenreparatursetsflüssigkeit nach Anspruch 8, **dadurch gekennzeichnet, dass** der modifizierte Ton, bevor es in die Mischung beigefügt wird, gemahlen wird.

12. Herstellungsverfahren für Reifenreparatursetsflüssigkeit nach Anspruch 8, **dadurch gekennzeichnet, dass** die Modifikation im Prozessschritt a, die folgenden Prozessschritte umfasst;
• die Mikronisation, das Waschen und die Aufnahme des Tonsin einen Behälter.
• die Beifügung des Tensidsin einem Kationenaustauschkapazitätsgehalt und die Vermischung unter Hitze,
• danach das Filtern, das Waschen mit destilliertem Wasser und das Trocknen.

13. Herstellungsverfahren für Reifenreparatursetsflüssigkeit nach Anspruch 12, **dadurch gekennzeichnet, dass** diese Vermischung, 24 Stunden verarbeitet wird.

## Revendications

1. Liquide du kit de réparation de pneu **caractérisé en ce qu'**ilcomprenddulatex, de l'anti-congelant,de l'argilemodifiéeavec un tensioactif.

2. Liquide du kit de réparation de pneu selon la revendication 1 **caractérisé en ce qu'**il comprend50-80% en poids de latex, 20-50% en poids de l'anti-congelant, 1-8% en poids de l'argile modifiée.

3. Liquide du kit de réparation de pneu selon la revendication 1 **caractérisé en ce que** l'anti-congélation, estl'éthylèneglycol.

4. Liquide du kit de réparation de pneu selon la revendication 1 **caractériséen ce qu**'ilcomprendde l'eau.

5. Liquide du kit de réparation de pneu selon la revendication 4 **caractérisé en ce que**leditrapportd'eauest 5-20% en poids.

6. Liquide du kit de réparation de pneu selon la revendication 1 **caractérisé en ce qu'**il comprend de l'antioxydant.

7. Liquide du kit de réparation de pneu selon la revendication 6**caractérisé en ce que**leditrapport de l'antioxydantest 2-10% en poids.

8. Liquide du kit de réparation de pneu, en utilisantlesélémentsmentionnés dans la revendication 1, **caractérisé en ce qu'il** comprendlesétapes de;
a) Lamodification de l'argileavec un tensioactif,
b) l'additionlentement de l'anti-congelant sur latex et lemélange,
c) l'additionde l'argilemodifiée dans leditmélange,

9. Procédé de production de liquide du kit de réparation de pneu selon la revendication 8, **caractérisé en ce que** le latex, avant d'êtremélangéavec de l'anti-congelant, estdiluéavec de **l'eau.**

10. Procédéde production deliquidedu kit de réparation de pneuselon la revendication **8,caractérisé en ce qu'** on ajoute de l'anti-congelant dans le mélangeàl'étape b.

11. Procédé de production de liquide du kit de réparation de pneu selon la revendication 8, **caractérisé en ce qu'**on broiel'argilemodifiée, avantajouter dans le mélange.

12. Procédé de production de liquide du kit de réparation de pneu selon la revendication 8, **caractérisé en ce que** la modificationàl'étape a comprendlesétapes de:
• le broyage, le lavage et l'inclusion dans un récipient de l'argile,
• l'additiondutensioactif, en taux de la capacitéd'échange de cations, sur celui-ci et le mélangesousl'effet de la chaleur,
• puis, la filtration, le lavageavec de l'eaupure et le séchage.

13. Procédé de production de liquide du kit de réparation de pneu selon la revendication **12,caractérisé en ce que**leditmélangeesteffectué pendant 24 heures.
